(19) Europäisches Patentamt
European Patent Office
Office européen des brevets

(11) Publication number: **0 070 105**
**B1**

(12) # EUROPEAN PATENT SPECIFICATION

(45) Date of publication of patent specification: **19.02.86**

(51) Int. Cl.$^4$: **B 60 T 13/38**

(21) Application number: **82303141.4**

(22) Date of filing: **16.06.82**

(54) **Multi-circuit fluid pressure braking system.**

(30) Priority: **26.06.81 GB 8119778**

(43) Date of publication of application:
**19.01.83 Bulletin 83/03**

(45) Publication of the grant of the patent:
**19.02.86 Bulletin 86/08**

(84) Designated Contracting States:
**DE FR IT NL SE**

(56) References cited:
**DE-A-2 520 692**
**GB-A-1 582 344**

**TECHNICAL PAMPHLET NO. 9/011 PUBLISHED BY BENDIX WESTINGHOUSE LIMITED IN APRIL 1976**

(73) Proprietor: **BENDIX LIMITED**
**Douglas Road**
**Kingswood, Bristol BS15 2NL (GB)**

(72) Inventor: **Hallett, Roger Charles**
**The Croft Park Close**
**Tetbury Glos (GB)**
Inventor: **Aggett, Barry**
**32 The Laurels**
**Mangotsfield Bristol. BS17 3BT (GB)**

(74) Representative: **Turner, Alan Reginald**
**BENDIX LIMITED Douglas Road**
**Kingswood, Bristol BS15 2NL (GB)**

**EP 0 070 105 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to multi-circuit fluid pressure braking systems for vehicles.

Multi-circuit vehicle fluid pressure braking systems have been proposed wherein two reservoirs for respective independent primary service brake circuits are charged via respective first and second circuit protection valves, one or more further circuits being supplied from said reservoirs via check valves and a further protection valve the reclosure pressure of the further protection valve being appreciably lower than that of the first and second protection valves whereby with suitable reservoir capacity, a prescribed number of service brake operations may be achieved (without regarge) without depleting the reservoirs to a pressure level below which secondary operation would be prevented. One such system as defined in the pre-characterising portion of independent claims 1 and 2, is described in U.K. Patent Specification GB—A—1,582,344. Furthermore, typical protection valves are described in technical pamphlet No. 9/011 published by Bendix Westinghouse Limited in April 1976.

A further particular requirement which has also to be met, when the multi-circuit system is employed to control the braking circuits of a trailer coupled thereto, concerns the magnitude of the available trailer brake control pressure after a predetermined number of brake applications. Typically, the control pressure for a ninth application after commencing with fully charged reservoir capacity must be at least 50% of the first application.

A problem may be encountered with a system such as described in the above mentioned Patent Specification to the extent that if a high transient demand for pressure occurs in the further circuit which is supplied via the further protection valve, the further protection valve may reclose prematurely and thereby inhibit the supply of pressure to the third circuit. One object of the invention is therefore to provide a system wherein this problem is removed or substantially reduced.

The present invention provides, according to the independent claim, a vehicle fluid pressure braking system including a reservoir for supplying a first pressure operable braking circuit, charging means for charging said reservoir with fluid under pressure via a protection valve having a first opening pressure value and a second lower reclosing pressure value, a unidirectional fluid flow path connecting said reservoir to an input port of a further protection valve having an output port connected to a further pressure operable braking circuit, characterised by said further protection valve having a pressure responsive element so controlled by fluid pressure at the output port as to provide a reclosing pressure value which is appreciably lower than said second reclosing pressure value for the first protection valve and a way out for pressure acting on said element via the output port which is so restricted as to effect constraint on transient air demands by the further circuit causing spurious reclosure of the further protection valve.

More particularly, the invention provides, according to independent claim 2, a vehicle fluid pressure braking system including first and second reservoirs for supplying respective first and second fluid pressure operable braking circuits, charging means for charging said reservoirs with fluid under pressure via respective first and second protection valves each having a respective first opening pressure value and a respective second lower reclosing pressure value, respective unidirectional fluid flow paths connecting said reservoirs to an input port of a further protection valve having an output port connected to a further pressure operable braking circuit, characterised by said further protection valve having a pressure responsive element so controlled by fluid pressure at the output port as to have a reclosing pressure which is appreciably lower than said second reclosing pressure values for said respective protection valves and a way out for pressure acting on said element via the output port which is so restricted as to effect constraint on transient air demand by the further circuit causing spurious reclosure of the further protection valve.

In order that the invention may be more clearly understood and readily carried into effect, the same will be further described by way of example with reference to the accompanying drawings of which:

Fig. 1 illustrates in schematic form a simplified multi-circuit fluid pressure operable braking system for a tractor vehicle, and

Fig. 2 illustrates schematically but more fully a design of third protection valve for use in the system of Fig. 1.

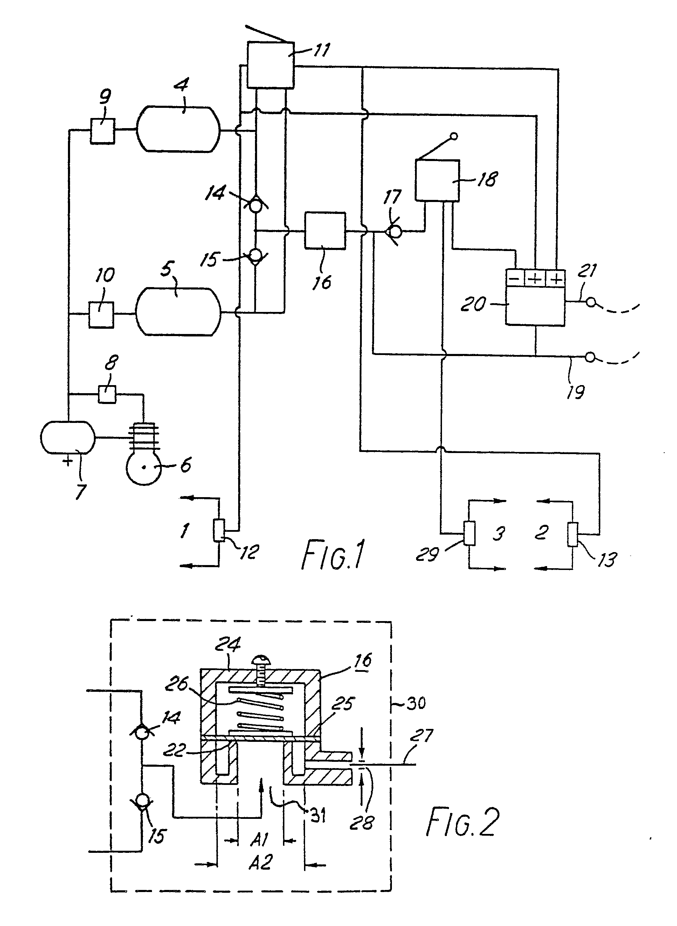

Referring to Fig. 1, the vehicle braking system is provided with air pressure operated front service brake actuators at 1 supplied by a first braking circuit and rear service actuators 2 supplied by a second braking circuit of the system. Additionally, spring brake actuators are provided at 3 which operate as secondary and/or parking brakes for the vehicle associated with the rear axle only and are normally maintained released by being fully pressurised by a third braking circuit. Reservoirs for the first and second braking circuits are denoted by references 4 and 5 and these are charged from a compressor 6 via a wet tank 7 the pressure in which is sensed by a governor 8 for operating a compressor unloader. The output of the wet tank 7 is fed in parallel by respective single circuit protection valves 9 and 10 to reservoirs 4 and 5. The output of reservoir 4 feeds a first valve of a dual foot valve 11 and the output of reservoir 5 feeds the second valve of the dual foot valve 11. The separate circuits of the foot valve supply the front actuators 1 via quick release valve 12 and rear actuators 2 via quick release valve 13. Additionally, reservoirs 4 and 5 are connected via respective check valves 14 and 15 and a common way-in to an input port of a further protection valve 16, the output port of which is connected on the one hand via a check valve 17 as a supply input to a secondary brake hand valve 18 and on the other hand to a trailer supply coupling 19. The output of valve 18 is connected to provide control or hold off pressure to spring brakes at 3 via a quick pressure release valve 29 and a second inverse output of valve 18 is applied as an input to a so-called "plus plus minus" multi-relay valve 20. Upright inputs to the multi-relay valve are provided from the respective circuits of the dual foot valve 11 and the output which appears at line 21 of the multi-circuit relay valve 20 constitutes the trailer service brake control pressure signal applied over a coupling 21 when the trailer is connected.

Referring briefly to Fig. 2, this shows diagrammatically within the dotted outline 30 the check valves 14 and 15 of Fig. 1, together with details of the further protection valve 16. The protection valve 16 consists of a housing 24 including a pressure responsive element in the form of a diaphragm 25 which is spring loaded by a spring 26 against a set 22. The diaphragm thereby presents an area A1 to the pressure at an input port 31 and when the pressure at output port 27 of the valve attains a sufficiently high level, the diaphragm is deflected upwards to present the appreciably larger area A2 to the reservoir pressure at input port 31, thereby holding the valve open. In the event of the pressure at output port 27 falling below a predetermined lower pressure which in the present instance is arranged by virtue of the relationship between the areas A1 and A2, to be appreciably lower than reclosure pressures for the protection valves 9 and 10, the diaphragm is deflected by spring 26 back onto the seat 22. In this particular type of protection valve, in order to prevent such reclosure occurring in the event of short transient demands for air pressure at output port 27, by virtue for example of rapid operation of the secondary brake valve 18, the way out for pressure acting on the pressure responsive element of the protection valve 16 is arranged at 28 to be so appreciably constricted in relation to the way-in to the valve that pressure acting under the area A2 does not fall momentarily to the reclosure pressure despite such transient demands. Typically the way out via the output port 27 may be up to 90% of the way-in through the input port 31 but is to be appropriately selected according to the characteristics associated with valve 18.

Referring now to the operation of the system of Fig. 1, the reservoirs 4 and 5 are charged in conventional manner from the compressor 6, wet tank 7 and single circuit protection valves 9 and 10 to a pressure determined by the governor 8. Normal service operation of actuators 1 and 2 is provided, in the normal case of intact first and second circuits, by operation of the foot valve 11 by the vehicle driver.

In the case of secondary operation being required, the driver operates the secondary brake valve 18. This valve is supplied in the present system via check valves 14 and/or 15, via the third protection valve 16 and check valve 17 and normally applies a hold-off pressure to the inverse input of the multi-relay valve 20 and to the rear spring brakes at 3. Such operation of valve 18 results in a reduction of the output pressures thereby on the one hand producing an elevated pressure at the relay valve output 21 for operation of trailer brakes and on the other hand producing a reduction of hold-off pressure to the spring brakes 3 via quick release valve 29.

Rapid operation of the secondary brake valve 18 could in certain circumstances cause an appreciable and rapid demand on valve 16 via the non-return valve 17 which would tend to cause the valve 16 to reclose prematurely and spuriously but because of the constricted way out for pressure from the pressure responsive element via the output port at 28, such premature reclosure is prevented.

In a typical system, the primary protection valves 9 and 10 may be set to open at 6.5 bar and have pressure responsive areas such that they reclose at 5 bar whereas the further protection valve 16 although set to open at 6.5 bar has a spring 26 and pressure responsive areas which enable it to remain open down to a reclose pressure of 3.5 bar. All these pressures are lower than the cut-in and cut-out settings of governor 8 which may typically be 7 bar and 9.5 bar respectively.

The purpose of the check valve 17 is to enable the spring brakes to remain in a fully released condition despite reduction of output pressure appearing at the output port of the protection valve 16 possibly due to failure of the supply line to the trailer via coupling 19.

Although the fluid pressure braking system which has been described above is a system for use on a driven or tractor vehicle, the invention may be applied to circuits of a trailer vehicle. In such a trailer two reservoirs could again be provided, changeable from the towing tractor, the first two circuits specifically supplied by these reservoirs being circuits of a split service braking system and the third circuit being employed for controlling spring brakes primarily for parking purposes.

**Claims**

1. A vehicle fluid pressure braking system including a reservoir (4) for supplying a first pressure operable braking circuit (1), charging means (6) for charging said reservoir with fluid under pressure via a protection valve (9) having a first opening pressure and a second lower reclosing pressure, a unidirectional fluid flow path connecting said reservoir to an input port of a further protection valve (16) having an output port connected to a further pressure operable braking circuit (3), characterised by said further protection valve (16) having a pressure responsive element (25) so controlled by fluid pressure at the output port as to provide a reclosing pressure which is appreciably lower than said second reclosing pressure for the first protection valve (9) and a way out for pressure acting on said element via the output port (27) which is so restricted as to effect constraint on transient air demands by the further circuit causing spurious reclosure of the further protection valve.

2. A vehicle fluid pressure braking system including first and second reservoirs (4, 5) for supplying respective first and second fluid pressure operable braking circuits (1, 2), charging means (6) for charging said reservoirs with fluid under pressure via respective first and second protection valves (9, 10) each having a respective first opening pressure and a respective second lower reclosing pressure, respective unidirectional fluid flow paths (14, 15) connecting said reservoirs (4, 5) to an input port of a further protection valve (16) having an output port connected to a further pressure operable braking circuit (3) characterised by said further protection valve having a pressure responsive element (25) so controlled by fluid pressure at the output port (27) as to have a reclosing pressure which is appreciably lower than said second reclosing pressure for said respective protection valves (9, 10) and a way out for pressure acting on said element via the output port which is so restricted as to effect constraint on transient air demands by the further circuit causing spurious reclosure of the further protection valve.

3. A vehicle fluid pressure braking system as claimed in claim 1 or 2 characterised by said further protection valve (16) having a way out via said output port (27) which is so appreciably less than the way in via said input port (29) as to effect said constraint.

4. A vehicle fluid pressure braking system as claimed in claim 2 or 3 characterised by the opening pressures of the first and second protection valves being substantially equal.

5. A vehicle fluid pressure braking system as claimed in claim 1, 2, 3 or 4 characterised by said element (25) of the further protection valve having a pressure responsive area subject to output port pressure selected to determine said lower reclosing pressure.

6. A vehicle fluid pressure braking system as claimed in any of claims 1 to 5 characterised by element (25) of further protection valve comprising a spring-loaded pressure responsive valve member which when closed presents a first area (A1) to pressure at the input port and which when open presents a second larger area (A2) to the pressure at the output port.

7. A vehicle fluid pressure braking system as claimed in any of the claims 1 to 6 characterised by including a restriction (28) located at the output port of the further protection valve.

8. A vehicle fluid pressure braking system as claimed in any preceding claim characterised by the further braking circuit (3) comprising a spring brake circuit and a control valve (18) therefore, a check valve (17) being provided between the further protection valve (16) and the control valve (18) in a sense to prevent fluid flow therefrom to the further protection valve.

9. A vehicle fluid pressure braking system as claimed in any of claims 1 to 8 characterised in that it is used in a tractor vehicle.

10. A vehicle fluid pressure braking system as claimed in any of claims 1 to 8 characterised in that it is used in a trailer vehicle.

**Patentansprüche**

1. Fahrzeug-Druckmittelbremssystem, umfassend einen ersten und einen zweiten Behälter (4, 5) zum Speisen eines ersten und eines zweiten durch Druckmittel betätigbaren Bremskreises (1, 2), eine Einrichtung (16) zum Aufladen der Behälter über betreffende Schutzventile (9, 10), deren jedes durch einen ersten Öffnungsdruck und einen zweiten niedrigeren Wiederschließdruck betätigbar ist, und Wege für Arbeitsmittelströmung in einer Richtung von den Behältern zum Speisen eines dritten Bremskreises über ein drittes Schutzventil (16), welches durch einen Öffnungsdruck betätigbar ist, der im wesentlichen demjenigen des ersten und des zweiten Schutzventiles gleichwertig ist, dadurch gekennzeichnet, daß das dritte Schutzventil (16) durch einen dritten Wiederschließdruck, der merkbar niedriger als der zweite niedrigere Wiederschließdruck für das erste und das zweite Schutzventil (9, 10) ist, betätigbar ist und eine Auslaßöffnung (27) hat, deren Fläche derart merkbar kleiner als diejenige einer Einlaßöffnung ist, daß verhindert ist, daß Übergangsluftanforderungen durch den dritten Kreis falsches Wiederschließen des dritten Schutzventiles hervorrufen.

2. Fahrzeug-Druckmittelbremssystem, umfassend einen ersten und einen zweiten Behälter (4, 5) zum Speisen jeweils eines ersten und eines zweiten durch Arbeitsmitteldruck betätigbaren Bremskreises (1, 2), eine Aufladeeinrichtung (6), um die Behälter mit unter Druck stehendem Arbeitsmittel über ein betreffendes erstes bzw. zweites Schutzventil (9, 10) aufzuladen, deren jedes einen betreffenden ersten Öffnungsdruck und einen betreffenden zweiten niedrigeren Wiederschließdruck hat, und betreffende Wege (14, 15) für Arbeitsmittelströmung in einer Richtung, welche die Behälter (4, 5) an eine Eingangsöffnung eines weiteren Schutzventiles (16) anschließen, welches eine Auslaßöffnung hat, die mit einem weiteren durch Druck betätigbaren Bremskreis (3) verbunden ist, dadurch gekennzeichnet, daß das weitere Schutzventil ein auf Druck ansprechendes Element (25), welches durch den Arbeitsmitteldruck an der Auslaßöffnung (27) derart gesteuert ist, daß es einen Wiederschließdruck hat, der merkbar niedriger als der zweite Wiederschließdruck für die betreffenden Schutzventile (9, 10) ist, und einen Ausgang für Druck, der auf das Element über die Auslaßöffnung wirkt, aufweist und derart verengt ist, daß auf Übergangsluftanforderungen durch den weiteren Kreis, die falsches Wiederschließen des weiteren Schutzventiles hervorrufen würden, ein Zwang oder eine Begrenzung ausgeübt wird.

3. Fahrzeug-Druckmittelbremssystem nach Anspruch 1 oder 2, dadurch gekennzeichnet, daß das weitere Schutzventil (16) einen Ausgang über die genannte Auslaßöffnung (27) hat, der derart merkbar niedriger als der Eingang über die genannte Einlaßöffnung (29) ist, daß der genannte Zwang bzw. die genannte Begrenzung hervorgerufen wird.

4. Fahrzeug-Druckmittelbremssystem nach Anspruch 2 oder 3, dadurch gekennzeichnet, daß die Öffnungsdrücke des ersten und des zweiten Schutzventiles im wesentlichen gleich sind.

5. Fahrzeug-Druckmittelbremssystem nach Anspruch 1, 2, 3 oder 4, dadurch gekennzeichnet, daß das Element (25) des weiteren Schutzventiles eine dem Druck der Auslaßöffnung unterworfene, auf Druck ansprechende Fläche hat, die so ausgewählt ist, daß der genannte niedrigere Wiederschließdruck bestimmt wird.

6. Fahrzeug-Druckmittelbremssystem nach irgendeinem der Ansprüche 1 bis 5, dadurch gekennzeichnet, daß das Element (25) des weiteren Schutzventiles ein federbelastetes, auf Druck ansprechendes Ventilglied aufweist, welches, wenn es geschlossen ist, eine erste Fläche (A1) dem Druck an der Einlaßöffnung darbietet, und welches, wenn es offen ist, eine zweite größere Fläche (A2) dem Druck an der Auslaßöffnung darbietet.

7. Fahrzeug-Druckmittelbremssystem nach irgendeinem der Ansprüche 1 bis 6, dadurch gekennzeichnet, daß es eine Verengung oder Drossel (28) umfaßt, die an der Auslaßöffnung des weiteren Schutzventiles angeordnet ist.

8. Fahrzeug-Druckmittelbremssystem nach irgendeinem der vorhergehenden Ansprüche, dadurch gekennzeichnet, daß der weitere Bremskreis (3) einen Federbremskreis und ein Steuerventil (18) dafür aufweist, und ein Rückschlagventil (17) zwischen dem weiteren Schutzventil (16) und dem Steuerventil (18) vorgesehen ist in einem Sinn, das Strömen von Arbeitsmittel von ihm zu dem weiteren Schutzventil zu verhindern.

9. Fahrzeug-Druckmittelbremssystem nach irgendeinem der Ansprüche 1 bis 8, dadurch gekennzeichnet, daß es in einem Zugfahrzeug verwendet ist.

10. Fahrzeug-Druckmittelbremssystem nach irgendeinem der Ansprüche 1 bis 8, dadurch gekennzeichnet, daß es in einem Anhänger verwendet ist.

**Revendications**

1. Système de freinage à fluide comprimé pour véhicule, comprenant un premier et un deuxième réservoirs (4, 5) destinés à alimenter un premier et un deuxième circuits (1, 2) de freinage à fluide comprimé, des moyens (6) pour remplir les dits réservoirs via des valves de protection (9, 10) respectives, chacune de ces valves pouvant être actionnée par une première pression d'ouverture et une deuxième pression, plus basse, de refermeture, des trajets d'écoulement unidirectionnel du fluide à partir des dits réservoirs pour alimenter un troisième circuit de freinage via une troisième valve de protection (16), la dite troisième valve de protection pouvant être actionnée par une pression d'ouverture substantiellement équivalente à celle de la première et de la deuxième valves de protection, caractérisé en ce que la troisième valve de protection (16) peut être actionnée par une troisième pression de refermeture qui est sensiblement plus basse que la deuxième pression, plus basse, de refermeture de la première et de la deuxième valves de protection (9, 10), et en ce qu'elle présente un orifice de sortie (27) dont la section est nettement inférieure à celle d'un orifice d'entrée, de façon à éviter que des fluctuations de l'appel d'air dans le troisième circuit ne causent la refermeture intempestive de la troisième valve de protection.

2. Système de freinage à fluide comprimé pour véhicule, comprenant un premier et un deuxième réservoirs (4, 5) destinés à alimenter respectivement un premier et un deuxième circuits (1, 2) de freinage à fluide comprimé, des moyens de chargement (6) pour remplir les dits réservoirs de fluide sous pression via respectivement une première et une deuxième valves de protection (9, 10) chacune d'elles ayant respectivement une première valeur de pression d'ouverture et une deuxième valeur, plus basse, de pression de refermeture, des trajets respectifs (14, 15) d'écoulement unidirectionnel du fluide reliant les dits réservoirs (4, 5) à un orifice d'entrée d'une valve de protection supplémentaire (16) comportant un orifice de sortie relié à un circuit supplémentaire (3) de freinage à pression, caractérisé en ce que la dite valve de protection supplémentaire comporte un élément (25) sensible à la pression commandé par le fluide comprimé se trouvant à l'orifice de sortie (27) de façon à présenter une valeur de la pression de refermeture qui est sensiblement plus basse que les dites deuxièmes valeurs de refermeture des dites valves de protection (9, 10) respectives, ainsi qu'une voie de sortie de la pression agissant sur le dit élément via l'orifice de sortie qui est ainsi rétréci de façon à contrarier les fluctuations de l'appel d'air dans le circuit supplémentaire causant la refermeture intempestive de la valve de protection supplémentaire.

3. Système de freinage à fluide comprimé pour véhicule suivant la revendication 1 ou 2, caractérisé en ce que la dite valve de protection supplémentaire (16) présente une voie de sortie via le dit orifice de sortie (27) qui est nettement plus petite que la voie d'entrée via le dit orifice d'entrée (29), de façon à constituer le rétrécissement contrariant les dites fluctuations.

4. Système de freinage à fluide comprimé pour véhicule suivant la revendication 2 ou 3, caractérisé en ce que les pressions d'ouverture des première et deuxième valves de protection sont sensiblement égales.

5. Système de freinage à fluide comprimé pour véhicule suivant la revendication 1, 2, 3 ou 4, caractérisé en ce que le dit élément (25) de la valve de protection supplémentaire présente une plage sensible à la pression, exposée à la pression régnant à l'orifice de sortie, dont l'aire est choisie de façon à déterminer la dite pression plus basse de refermeture.

6. Système de freinage à fluide comprimé pour véhicule suivant l'une ou l'autre des revendications 1 à 5, caractérisé en ce que l'élément (25) de la valve de protection supplémentaire comprend un organe de soupape sensible à la pression et soumis à l'action d'un ressort, qui, lorsqu'il est fermé, présente une première plage (A1) exposée à la pression régnant à l'orifice d'entrée et, lorsqu'il est ouvert, présente une deuxième plage (A2), plus grande, exposée à la pression régnant à l'orifice de sortie.

7. Système de freinage à fluide comprimé pour véhicule suivant l'une ou l'autre des revendications 1 à 6, caractérisé en ce qu'il présente un rétrécissement (28) à l'orifice de sortie de la valve de protection supplémentaire.

8. Système de freinage à fluide comprimé pour véhicule suivant l'une ou l'autre des revendications précédentes, caractérisé en ce que le circuit (3) de freinage supplémentaire comprend un circuit de freinage à ressort accumulateur et une valve de commande (18) qui lui est associée, une valve de contrôle (17) étant prévue entre la valve de protection supplémentaire (16) et la valve de commande (18) dans un sens tel qu'elle évite l'écoulement du fluide à partir de celle-ci vers la valve de protection supplémentaire.

9. Système de freinage à fluide comprimé pour véhicule suivant l'une ou l'autre des revendications 1 à 8, caractérisé en ce qu'il est utilisé sur un véhicule tracteur.

10. Système de freinage à fluide comprimé pour véhicule suivant l'une ou l'autre des revendications 1 à 8, caractérisé en ce qu'il est utilisé sur une remorque.

11
9
4
14
17
18
15
16
10
5
21
20
8
19
7
6
1
12
FIG.1
29
3
2
13
24
16
26
30
25
14
27
22
15
31
28
FIG.2
A1
A2